# EUROPÄISCHE PATENTSCHRIFT

(11) **EP 0 735 659 B1**
(45) Veröffentlichungstag und Bekanntmachung des Hinweises auf die Patenterteilung: **13.01.1999**
(21) Anmeldenummer: 95104444.5
(22) Anmeldetag: 25.03.1995
(51) Int. Cl.: H02M 7/5387, H02M 3/337

(54) **U-Umrichter mit Vorgabe für Frequenz und Spannungskurvenform**
Inverter with frequency and voltage waveform generation
Onduleur avec génération de formes d'ondes de fréquence et tension

(43) Veröffentlichungstag der Anmeldung: 02.10.1996
(73) Patentinhaber: AEG - Elotherm GmbH, D-42855 Remscheid (DE)
(72) Erfinder: Matthes, Hans-Georg, Dipl.-Ing., D-42929 Wermelskirchen (DE); Sterling, Michael, Dipl.-Ing., D-42799 Leichlingen (DE)
(74) Vertreter: Cohausz & Florack Patentanwälte

(56) Entgegenhaltungen:
- DE-A- 3 733 263
- DE-A- 3 842 910
- US-A- 4 660 137
- US-A- 4 700 285

## Beschreibung

Die Erfindung betrifft ein Verfahren bzw. eine Vorrichtung zur Leistungsversorgung eines Lastzweipols bestehend aus einem ungesteuerten, netzgespeisten Gleichrichter, einem kapazitiven Zwischenkreis und einem Wechselrichter, der als Brückenschaltung von mit Transistorschaltern versehenen Brückenzweigen ausgebildet ist, wobei der Lastzweipol im Querzweig der Brückenschaltung angeordnet ist.

Eine Vorrichtung dieser Art ist aus der US 5 285 372 bekannt.

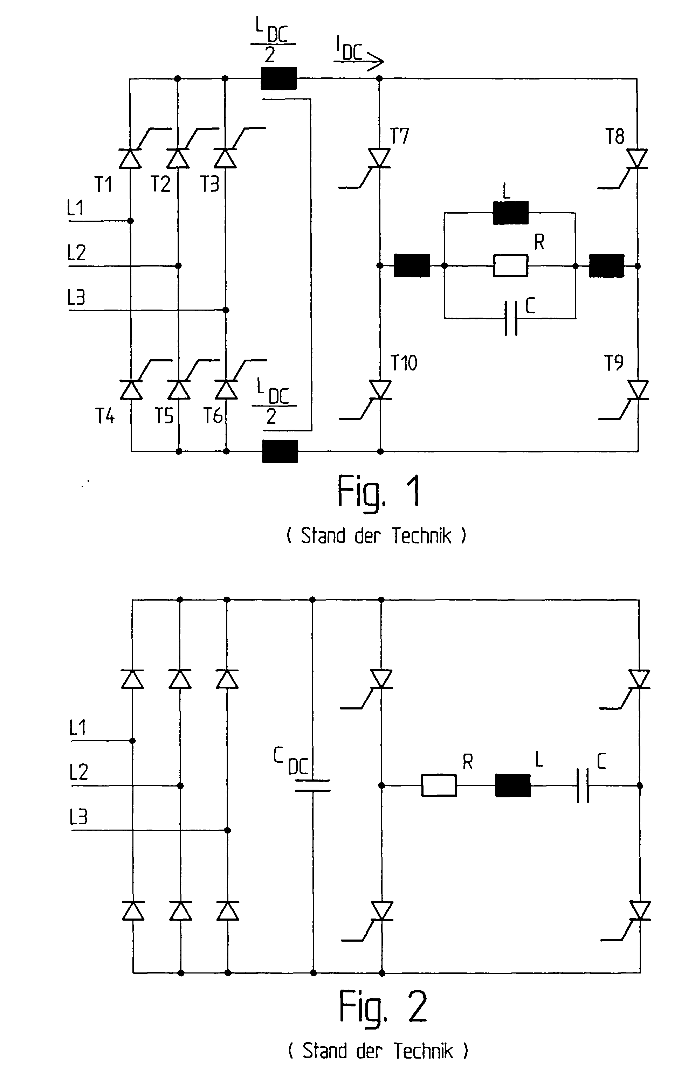

Üblicherweise werden Umrichter zum Speisen von unterschiedlichen Lasten eingesetzt. Grundsätzlich unterscheidet man dabei solche Umrichter, die zur Speisung von Parallelschwingkreisen geeignet sind (Fig.1) und solche, die zur Speisung von Reihenschwingkreisen (Fig.2) geeignet sind. Im ersteren Fall ist der Umrichter durch einen gesteuerten netzgespeisten Gleichrichter gebildet, welcher auf einen induktiven Zwischenkreis arbeitet, der wiederum den Wechselrichter versorgt, an dem der Lastschwingkreis L,R,C angeschlossen ist (Fig.1). Der Wechselrichter ist dabei von in einer Brückenschaltung angeordneten Thyristoren und/oder Transistoren gebildet, die derart wechselweise gestaltet sind, daß Stromblöcke auf den Lastschwingkreis gegeben werden.

Eine ähnliche Anordnung ist aus der DE 33 31 690 bekannt, bei der die Thyristoren durch Transistoren ersetzt sind und bei der der Umrichter zwei vermaschte Regelkreise aufweist, von denen der eine den Steuerwinkel des netzgespeisten Gleichrichters regelt und der andere eine ordnungsgemäße Kommutierung der Wechselrichterdiagonalen mit der Zündfrequenz sicherstellt. Ein Nachteil dieser Anordnung besteht darin, daß der Grundschwingungs-Leistungsfaktor vom Zündwinkel abhängig ist, welcher zur Einstellung der Schwingkreisleistung erforderlich ist. Der Grundschwingungs-Leistungsfaktor ist daher von der Last abhängig.

Die DE 38 42 910 beschreibt eine Vorrichtung zur Stromversorgung eines Kochmagnetrons über einen Umrichter mit einer Transistor-Brückenschaltung. Zur Steuerung der Transistoren wird der aktuelle Magnetronstrom gemessen, mit einer benutzergewählten Ausgangsleistung verglichen und die Impulsdauern zur Schaltung der Transistoren entsprechend eingestellt. Zum Schutz der Transistoren vor Spitzenspannungen ist eine Begrenzung der Umschaltströme vorgesehen. Die Ansteuerung der Transistoren erfolgt mit einer fest vorgebbaren Frequenz.

Eine Schaltung der eingangs genannten Art ist aus der eingangs genannten Art bekannt und in Fig.2 dargestellt, die einen für einen Reihenschwingkreis ausgelegten Umrichter zeigt, welcher aus einem ungesteuerten Gleichrichter und einem kapazitiven Zwischenkreis besteht. Zwar gewährleistet der ungesteuerte Gleichrichter eine Unabhängigkeit des Grundschwingungs-Leistungsfaktors von der Last. Diese Schaltung weist aber den Nachteil auf, daß die Einstellung der in die Last eingespeisten Leistung über die Frequenz des Wechselrichters erfolgt. Wegen der Frequenzabhängigkeit der Ankopplungsbedingungen an die Last ist diese Lösung insbesondere beim induktiven Erwärmen ungünstig.

Der Erfindung liegt die Aufgabe zugrunde, eine Vorrichtung der eingangs genannten Art dahingehend weiterzuentwickeln, daß sie einen universelleren Einsatz ermöglicht und insbesondere die oben beschriebenen Nachteile vermeidet.

Diese Aufgabe wird erfindungsgemäß bei einer Vorrichtung der eingangs genannten Art dadurch gelöst, daß zur Ansteuerung der Transistorschalter des Wechselrichters eine Steuerschaltung vorgesehen ist, deren Ausgangssignal ein Rechteckimpulssignal variabler Pulsbreite ist und daß der Steuerschaltung eine Detektierschaltung zur Ermittlung der aktuellen Eigenfrequenz des Lastzweipols sowie eine Leistungsvorgabeschaltung vorgeordnet ist derart, daß durch die Breite des Impulssignals die vom Umrichter dem Lastzweipol zuzuführende Leistung einstellbar ist und daß die Wiederholung der Impulse mit der durch die Eigenfrequenz bestimmten Taktfrequenz erfolgt, wobei der Steuerschaltung darüber hinaus eine Begrenzerschaltung vorgeordnet ist, welche bei Überschreitung eines zulässigen Transistorstromes bzw. einer zulässigen Transistorspannung einen Befehl an die Steuerschaltung zur Begrenzung der Impulsbreite abgibt.

Bei einem Verfahren, wie es der eingangs genannten Gattung entspricht, wird diese Aufgabe erfindungsgemäß dadurch gelöst, daß die Ansteuerung der Transistoren mittels Rechteckimpulsen erfolgt, deren Tastverhältnis entsprechend der in den Lastzweipol einzuspeisenden Leistung eingestellt wird und daß deren Taktfrequenz derart gewählt wird, daß sie bei einen Schwingkreis enthaltenden Lastzweipol an dessen Eigenfrequenz und bei allen übrigen Lastzweipolen an eine vorgebbare Frequenz angepaßt wird, wobei die Breite der Rechteckimpulse dahingehend begrenzt wird, daß der zulässige Transistorstrom bzw. die zulässige Transistorspannung nicht überschreitten werden.

Die Erfindung zeichnet sich dadurch aus, daß die Ansteuerung der Transsistoren in den Brückzweigen des Wechselrichters mittels der Rechteckimpulse so erfolgt, daß die Energieeinspeisung in den Lastzweipol jeweils zum optimalen Zeitpunkt erfolgt. Dies wird dadurch erreicht, daß bei Lastzweipolen mit einem Schwingkreis die jeweils aktuelle Eigenfrequenz dieses Lastzweipols ermittelt wird und hierdurch die Taktfrequenz der Ansteuerrechteckimpulse derart festgelegt wird, daß der Einschaltzeitpunkt bzw. der Ausschaltzeitpunkt der Rechteckimpulse im Bereich der Nulldurchgänge des im Lastzweipol vorhandenen Schwingungsverlaufs erfolgt und dabei der Ausschaltzeitpunkt bzw. der Einschaltzeitpunkt so bemessen ist, daß die Spannungs-/Zeitfläche des Impulses entsprechend der in den Lastzweipol einzuspeisenden elektrischen Leistung gewählt ist. Neben dem Vorteil, der auch beim Stand der Technik vorhanden ist, daß der Grundschwingungsleistungsfaktor konstant ist, ermöglicht die erfindungsgemäße Lösung zusätzlich eine variable Anpassung an Lastzweipole unterschiedlicher Art. Dies können nicht nur Reihen-Schwingkreise sein, sondern auch solche Zweipole, die aus einer gemischt kapazitiv ohmschen (RC) Last oder einer gemischt induktiv ohmschen (RL) Last wie auch einer rein ohmschen (R) Last besteht. In den letztgenannten Fällen eines keinen Schwingkreis enthaltenden Zweipols erfolgt in Ermangelung einer Eigenfrequenz die Vorgabe einer festen Schaltfrequenz. Darüber hinaus ist auch ein Einsatz der erfindungsgemäßen Vorrichtung bzw. des erfindungsgemäßen Verfahrens für Parallelschwingkreise möglich.

Ein weiterer Vorteil der Erfindung ist darin zu sehen, daß durch die Begrenzerschaltung die Steuerimpulsbreite auf eine Maximalbreite begrenzt wird, die dem höchstzulässigen Transistorstrom bzw. der höchstzulässigen Transistorspannung entspricht. Die Begrenzerschaltung "überrollt" dabei die übrigen der Steuerschaltung vorgeordneten Stufen, um eine Bauelementzerstörung zu verhindern.

Bevorzugte Ausführungsformen der Erfindung sind in den Unteransprüchen gekennzeichnet.

Eine bevorzugte Ausführungsform der Erfindung sieht vor, daß das Rechteckimpulssignal variabler Pulsbreite aus einem Impulspaket zusammengesetzt ist, dessen einzelne Impulse variable Breite haben. Diese Variante zeichnet sich dadurch aus, daß nicht nur wie bei einem aus einem einzelnen Impuls bestehenden Signal gemäß der erfindungsgemäßen Lösung die Leistung vorgebbar ist, sondern daß zusätzlich dazu auch die Kurvenform des Strom- bzw. Spannungsverlaufes im einzelnen nachbildbar ist, indem die Breite der Einzelimpulse des Impulszuges entsprechend angepaßt wird.

Die Erfindung wird im folgenden anhand der Fig. 3, die ein Ausführungsbeispiel zeigt und den Fig. 4a - 4c und 5 näher erläutert, die die Funktion erläutern.

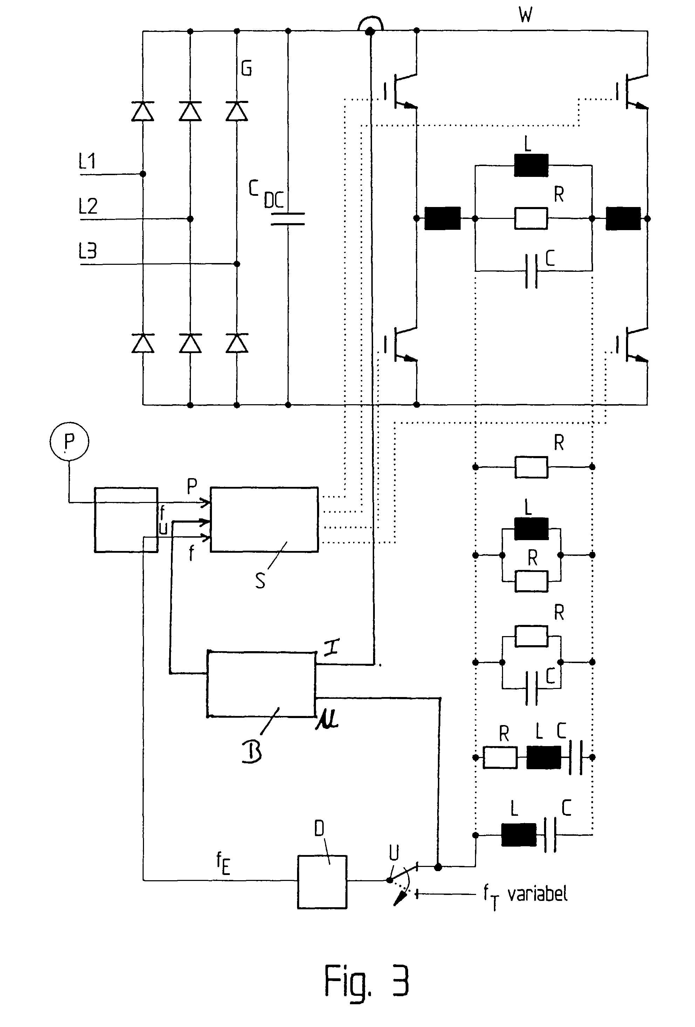

Der Gleichrichter G in Fig. 3 besteht aus in Brückenschaltung angeordneten Dioden, welche von einem dreiphasigen Netz L1,L2,L3 versorgt werden, wobei an dem Ausgang der Brückenschaltung ein kapazitiver Zwischenkreis C_{DC} angeschlossen ist. Der kapazitive Zwischenkreis arbeitet auf einen Wechselrichter W. Dieser besteht aus in Brückenschaltung angeordneten Transistoren, die über eine Steuerschaltung S einzeln ansteuerbar sind.

Im Querzweig der Brückenschaltung des Wechselrichters liegt die Last, die entweder als Parallelschwingkreis (oberes Bild) oder durch jede andere vorstellbare Art eines R,L,C Netzwerkes (untere Bilder) ausgebildet sein kann.

Der Steuerschaltung S ist zum einen eine Leistungseinstellvorrichtung P vorgeordnet und zum anderen eine Frequenzerzeugungsschaltung D. Die Frequenzerzeugungsschaltung D ist eingangsseitig mit einem Umschalter U verbunden, in dessen erster Stellung die Frequenzerzeugungsschaltung D mit dem jeweiligen Lastzweipol verbunden ist.

In der anderen Stellung des Umschalters U ist der Eingang der Frequenzerzeugungsschaltung D mit einem Anschluß verbunden, an dem eine variable Eingangstaktfrequenz F_{T} vorgebbar ist.

Der Frequenzerzeugerschaltung D und der Leistungseinstellvorrichtung ist eine Begrenzerschaltung B nebengeordnet, deren Eingangsgrößen der Istwert des Transistorstromes I und der Istwert der Umrichterspannung U sind. Der Ausgang der Begrenzerschaltung B ist mit dem Eingang der Steuerschaltung S verbunden. Innerhalb der Begrenzerschaltung B ist eine Vergleicherstufe realisiert, die die gemessenen Eingangsgrößen I,U mit den bauelementbedingt zulässigen Größen, wie dem maximal zulässigen Strom I_{zul}, vergleicht. Stellt der Begrenzer B eine Überschreitung fest, gibt er ein Ausgangssignal ab, welches am Eingang der Steuerschaltung S deren übrige Eingangsgrößen überrollt, so daß eine Begrenzung der Impulsbreite der Steuerimpulse folgt, die von der Steuerschaltung S ausgegeben werden.

Die erfindungsgemäße Vorrichtung arbeitet wie folgt:

Wenn der Lastzweipol ein Schwingkreis ist, der als Reihenschwingkreis (untere Bilder) oder als Parallelschwingkreis (oberes Bild) ausgebildet sein kann, befindet sich der Umschalter U in seiner oberen Stellung. Dabei erfaßt die als Detektiereinrichtung ausgebildete Frequenzerzeugungsschaltung D die Eigenfrequenz des Lastzweipols als aktuellen Istwert. Das hierdurch gewonnene Frequenzsignal für die Eigenfrequenz f_{E} wird an den Eingang der Steuerschaltung S gegeben, der ebenfalls ein Signal für die Größe der in den Schwingkreis abzugebenden Leistung P enthält. Die Ansteuerung der Transistoren in den Brückenzweigen der Wechselrichterschalter W erfolgt nun so, daß der Einschaltzeitpunkt des Rechteckimpulses so gewählt ist, daß er synchron mit der Eigenfrequenz f_{E} des Lastschwingkreises erfolgt. Der Ausschaltzeitpunkt des jeweiligen Impulses und damit dessen Impulsbreite wird so gewählt, daß die gewünschte Leistung P dem Lastzweipol zur Verfügung gestellt wird. Bei unveränderter Eigenfrequenz läßt sich die Leistung über die Impulsbreite variieren. Durch die periodische Leistungszufuhr entsprechend dem von der Eigenfrequenz vorgegebenen Takt wird eine optimale Leistungsanpassung ermöglicht.

Wenn der Lastzweipol nur eines der Elemente L oder C enthält, wird die Impulswiederholfrequenz mangels einer Eigenfrequenz des Lastzweipols von außen fest vorgegeben. Hierzu befindet sich der Umschalter U in der unteren Stellung und ist mit der Vorgabeschaltung für die Betriebsfrequenz f_{T} verbunden. Durch die Variabilität der Frequenzvorgabe ist eine Anpassung an unterschiedliche Lastbedingungen möglich. Im übrigen arbeitet die Schaltung wie oben beschrieben.

In den Figuren 4a bis 4c sind verschiedene Möglichkeiten dargestellt, wie die Rechteckimpulse im Bezug auf die (sinusförmige) Schwingkreisgröße (Strom bzw. Spannung) angeordnet sein kann.

Gemäß Fig. 4a ist der die Ansteuerung der Transistoren in den Brückenzweigen der Wechselrichterschalter W durchführende Rechteckimpuls zeitlich so angeordnet, daß er stets beim Nulldurchgang der Schwingkreisgröße beginnt und seine Dauer - dargestellt durch die Richtung des Doppelpfeiles - entsprechend der gewünschsten Leistung variiert wird.

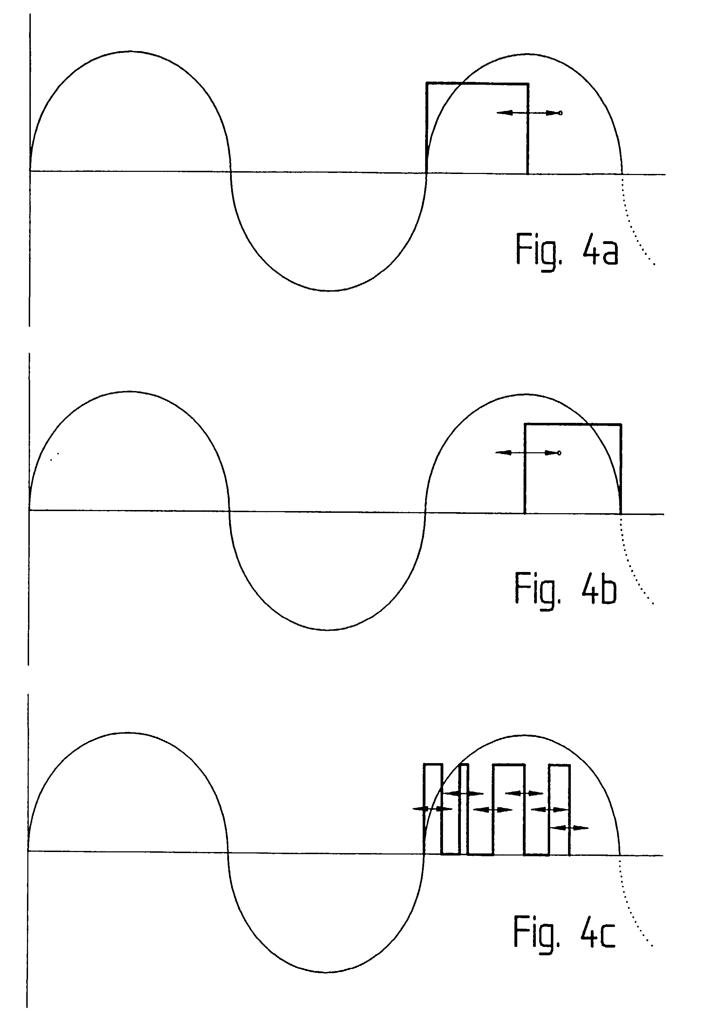

Im Unterschied dazu ist gemäß Fig. 4b der Einschaltzeitpunkt des Rechteckimpulses variabel, während der Ausschaltzeitpunkt durch den Nulldruchgang der Schwingkreisgröße definiert ist. In beiden dargestellten Fällen läßt sich die Leistung über die Impulsbreite variieren.

Fig. 4c zeigt eine alternative Gestaltung der Rechteckimpulsansteuerung:

Dabei ist der einzelne Rechteckimpuls in ein Impulspaket aufgeteilt, welches aus einzelnen rechteckförmigen Impulsen variabler Breite besteht. Diese impulszugförmige Anordnung hat den Vorteil, daß nicht nur die Leistung sondern auch die Kurvenform der abzubildenden Spannung bzw. des abzubildenden Stromes genau dargestellt werden kann, indem nicht nur die Breite des gesamten Impulszuges sondern auch die der einzelnen Teilimpulse entsprechend angepaßt wird.

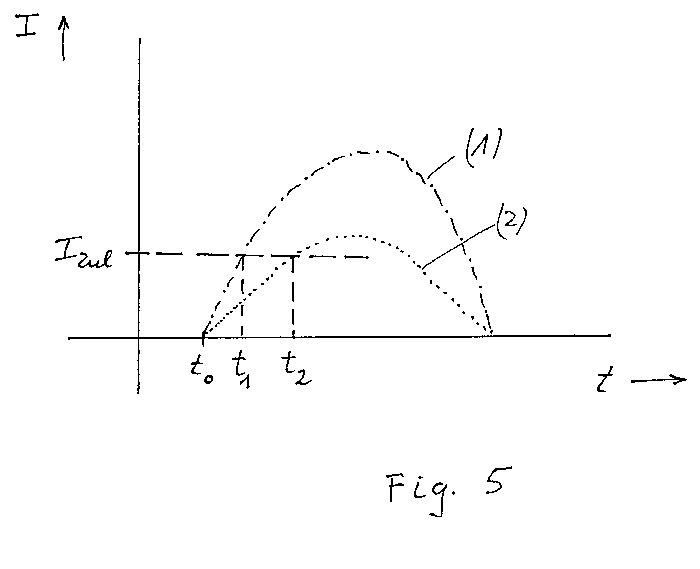

Fig. 5 zeigt den zeitlichen Stromverlauf des Transistorstromes am Eingang des Wechselrichters W. Es sind zwei typische Stromverläufe (1) bzw. (2) dargestellt, die sich im Bezug auf die Strom-Amplitude unterscheiden.

Der zur Vermeidung einer Bauelementzerströrung maximal zulässige Strom I_{zul} ist ebenfalls in Fig. 5 eingezeichnet, nämlich als waagerechte gestrichelte Linie.

In dem Lastfall, daß die Last des Schwingkreises durch einen Reihen- oder Parallelschwingkreis gebildet wird, ergibt sich ein Strom, der gleich dem Betrag eines Sinus-förmigen Stroms ist, wie er in Fig. 5 dargestellt ist.

Zum Zeitpunkt t=t₀ werden die jeweiligen Transistoren gezündet. Je nach lastbedingtem Stromverlauf (1) oder (2) erfolgt ein steilerer (1) oder flacherer (2) Stromanstieg bis zum Erreichen des zulässigen Stromes. Die Zeit bis zum Erreichen des zulässigen Stromes I_{zu1} beträgt beim Stromverlauf (1) zum Zeitpunkt t₁ und beim Stromverlauf (2) zum Zeitpunkt t₂.

Um eine Zerstörung der Transistoren aufgrund der theoretischen Stromverläufe (1) bzw. (2) zu verhindern, setzt zu dem Zeitpunkt t₁ bzw. t₂ die in Fig. 3 dargestellte Begrenzerschaltung B dahingehend ein, daß sie einen Begrenzungsbefehl an die Steuereinrichtung S abgibt. Hierdurch wird - unabhängig von den durch die übrigen Steuerfunktionen vorgegebenen Werten - eine Zwangsbegrenzung der Steuerimpulsbreite durchgeführt.

Eine entsprechende Begrenzung, wie sie in Fig. 5 anhand des Stromverlaufs dargestellt wurde, läßt sich auch im Bezug auf den Spannungsverlauf erreichen. Hierzu dient die in Fig. 3 dargestellte Verbindungsleitung von der Wechselrichterlast zum Eingang der Begrenzerschaltung B (Bezugszeichen u).

## Patentansprüche

1. Umrichter zur Leistungsversorgung eines Lastzweipols (L, R, C) bestehend aus einem ungesteuerten, netzgespeisten Gleichrichter (G), einem kapazitiven Zwischenkreis (C_{DC}) und einem Wechselrichter (W), der als Brückenschaltung von mit Transistorschaltern versehenen Brückenzweigen ausgebildet ist, wobei der Lastzweipol (L,R,C) im Querzweig der Brückenschaltung angeordnet ist, wobei zur Ansteuerung der Transistorschalter des Wechselrichters (W) eine Steuerschaltung (S) vorgesehen ist, deren Ausgangssignal ein Rechteckimpulssignal variabler Pulsbreite ist und daß der Steuerschaltung (S) eine Frequenzerzeugungsschaltung (D) zur Vorgabe einer Taktfrequenz (f_{E}) sowie eine Leistungsvorgabeschaltung (P) vorgeordnet ist derart, daß durch die Breite des Impulssignals die vom Umrichter dem Lastzweipol (L,R,C) zuzuführende Leistung einstellbar ist und daß die Wiederholung der Impulse mit der durch die Taktfrequenz (F_{E}) bestimmten Taktfrequenz erfolgt, wobei der Steuerschaltung (S) darüber hinaus eine Begrenzerschaltung (B) vorgeordnet ist, welche bei Überschreitung eines zulässigen Transistorstromes (I_{zul}) bzw. einer zulässigen Transistorspannung (U_{zul}) einen Befehl an die Steuerschaltung (S) zur Begrenzung der Impulsbreite abgibt,
**dadurch gekennzeichnet,**
daß der Frequenzerzeugungsschaltung (D) ein Umschalter (U) vorgeordnet ist, mittels der das Eingangssignal der Frequenzerzeugungsschaltung (D) alternativ von der mittels einer Meßeinrichtung gemessenen Frequenz eines einen Schwingkreis enthaltenden Lastzweipols oder von einem vorgebbaren Frequenzwert (F_{T}) gewinnbar ist.

2. Vorrichtung nach Anspruch 1,
**dadurch gekennzeichnet,** daß der Beginn des jeweiligen Rechteckimpulses beim Nulldurchgang des Stromes liegt.

3. Vorrichtung nach Anspruch 1,
**dadurch gekennzeichnet,** daß das Pulsende des jeweiligen Rechteckimpulses im Nulldurchgang des Stromes liegt.

4. Vorrichtung nach einem der vorhergehenden Ansprüche,
**dadurch gekennzeichnet,** daß das Rechteckimpulssignal variabler Pulsbreite aus einem Impulspaket zusammengesetzt ist, dessen einzelne Impulse variable Breite haben.

5. Verfahren zum Speisen eines Lastzweipols mittels eines Umrichters, der seine Leistung über einen Wechselrichter zur Verfügung stellt, welcher über einen kapazitiven Zwischenkreis von einem ungesteuerten netzgespeisten Gleichrichter versorgt wird, wobei die Diagonal zweige des als Brückenschaltung ausgebildeten Wechselrichters wechselweise leitend sind, in dem die in jedem Zweig des Wechselrichters vorgesehenen Transistoren abwechselnd angesteuert werden,
**dadurch gekennzeichnet,** daß die Ansteuerung der Transistoren mittels Rechteckimpulsen erfolgt, deren Tastverhältnis entsprechend der in den Lastzweipol einzuspeisenden Leistung eingestellt wird und daß deren Taktfrequenz derart gewählt wird, daß sie bei einem einen Schwingkreis enthaltenden Lastzweipol an dessen Eigenfrequenz und bei allen übrigen Lastzweipolen an eine vorgebbare Frequenz angepaßt wird, wobei die Breite der Rechteckimpulse dahingehend begrenzt wird, daß der zulässige Transistorstrom bzw. die zulässige Transistorspannung nicht überschritten werden.

## Claims

1. A converter for the power supply of a two-pole power network (L, R, C) consisting of an uncontrolled mains-supplied rectifier (G), a capacitive intermediate circuit (C_{DC}) and an inverter (W) designed as a bridge circuit of bridge branches equipped with transistor switches wherein the two-pole power network (L, R, C) is arranged in the transverse branch of the bridge circuit while a control circuit (S) for the triggering of the transistor switch of the inverter (W) is provided, the output signal of which is a square-wave impulse signal of variable pulse width and that a frequency generation circuit (D) for the pre-setting of a clock frequency (f_{B}) and a power default circuit (P) are arranged before the control circuit (S) in such a way that the power supplied from the converter to the two-pole power network (L, R, C) is adjustable through the width of the impulse signal and that the repetition of the impulses takes place with the clock frequency determined by the clock frequency (F_{E}) and wherein a limiting circuit (B) is additionally arranged before the control circuit (S) which sends a signal to the control circuit (B) for the limitation of the impulse width if a permissible transistor current (Iₚₑᵣₘ) or a permissible transistor voltage (Uₚₑᵣₘ) is exceeded, characterised in that a change-over switch (U) is arranged before the frequency generation circuit (D) by means of which the input signal of the frequency generation circuit (D) can alternatively be obtained from the frequency of a two-pole power network containing a resonant circuit measured by means of a measuring device or from a presettable frequency value (F_{T}).

2. A device according to Claim 1, characterised in that the start of the respective square wave impulse is situated at the zero passage of the current.

3. A device according to Claim 1, characterised in that the pulse end of the respective square wave signal is situated in the zero passage of the current.

4. A device according to one of the preceding claims, characterised in that the square wave signal of variable pulse width consists of an impulse package wherein the individual impulses of have variable widths.

5. A method for the supply of a two-pole power network by means of a converter the power of which is supplied by way of an inverter which is supplied by an uncontrolled mains-fed rectifier by way of a capacitive intermediate circuit, wherein the diagonal branches of the inverter designed as a bridge circuit are alternately conductive in that the transistors provided in each branch of the inverter are alternately triggered, characterised in that the triggering of the transistors is effected by means of square wave impulses the duty cycle of which is adjusted according to the power to be fed into the two-pole power network and that their clock frequency is selected in such a way that with a two-pole power network containing a resonant circuit it is matched to its natural frequency and with all remaining two-pole power networks to a presettable frequency while the width of the square wave impulses is limited in order to prevent that the permissible transistor current or the permissible transistor voltage are exceeded.

## Revendications

1. Convertisseur de fréquence pour l'alimentation en puissance d'un dipôle de charge (L, R, C) constitué par un redresseur non commandé (G) alimenté par le réseau, un circuit intermédiaire capacitif (C_{DC}) et un onduleur (W), qui est agencé sous la forme d'un circuit en pont comportant des bras équipés d'interrupteurs à transistors, dans lequel le dipôle de charge (L, R, C) est disposé dans la branche transversale du circuit en pont, et il est prévu, pour la commande des interrupteurs à transistors de l'onduleur (W), un circuit de commande (S), dont le signal de sortie est un signal en forme d'impulsion rectangulaire avec une largeur d'impulsion variable et qu'un circuit (D) de production de fréquence servant à prédéterminer une fréquence de cadence (f_{E}) ainsi qu'un circuit (P) de prédétermination de puissance sont disposés en amont d'un circuit de commande (S) de telle sorte que la puissance, qui doit être envoyée par le convertisseur de fréquence au dipôle de charge (L, R, C), est réglable au moyen de la largeur du signal impulsionnel et que la répétition des impulsions s'effectue avec la fréquence de cadence déterminée par la fréquence de cadence (F_{E}), et dans lequel en outre en amont du circuit de commande (S) est branché un circuit limiteur (B), qui, lors du dépassement d'un courant admissible (I_{zul}) du transistor ou d'une tension admissible (U_{zul}) du transistor, délivre une instruction au circuit de commande (S) pour limiter la largeur d'impulsion,
caractérisé en ce qu'en amont du circuit (D) de production de fréquence est branché un commutateur (U), à l'aide duquel le signal d'entrée du circuit (D) de production de fréquence peut être obtenu alternativement à partir de la fréquence, mesurée au moyen d'un dispositif de mesure, d'un dipôle de charge contenu dans un circuit oscillant, ou à partir d'une valeur de fréquence (F_{T}) devant être prédéterminée.

2. Dispositif selon la revendication 1, caractérisé en ce que le début de l'impulsion rectangulaire respective se situe au niveau de passage par zéro du courant.

3. Dispositif selon la revendication 1, caractérisé en ce que la fin de l'impulsion rectangulaire respective est située au niveau du passage par zéro du courant.

4. Dispositif selon l'une des revendications précédentes, caractérisé en ce que le signal à impulsions rectangulaires de largeur variable est constitué par un paquet d'impulsions, dont les impulsions individuelles ont des largeurs variables.

5. Procédé pour alimenter un dipôle de charge à l'aide d'un convertisseur de fréquence qui délivre sa puissance par l'intermédiaire d'un onduleur qui est alimenté par l'intermédiaire d'un circuit intermédiaire capacitif par un redresseur non commandé, alimenté par le réseau, les branches diagonales de l'onduleur réalisé sous la forme d'un circuit en pont étant alternativement conductrices par le fait que les transistors prévus dans chaque branche de l'onduleur sont commandés d'une manière alternée,
caractérisé en ce que la commande des transistors est réalisée à l'aide d'impulsions rectangulaires, dont le taux d'impulsions est réglé en fonction de la puissance devant être injectée dans le dipôle de charge, et dont la fréquence de cadence est choisie de telle sorte que, dans le cas d'un dipôle de charge contenant un circuit oscillant, elle est adaptée à la fréquence propre de ce circuit et, dans le cas de tous les autres dipôles de charge, est adaptée à une fréquence pouvant être prédéterminée, la largeur des impulsions rectangulaires étant limitée en ce sens que le courant admissible d'un transistor n'est pas dépassé.
